(19) Europäisches Patentamt
European Patent Office
Office européen des brevets

(11) **EP 3 803 357 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **19727364.2**

(22) Anmeldetag: **28.05.2019**

(51) Internationale Patentklassifikation (IPC):
**G01N 23/2273** (2018.01)

(52) Gemeinsame Patentklassifikation (CPC):
**G01N 23/2273; G01N 2223/304; G01N 2223/605**

(86) Internationale Anmeldenummer:
**PCT/EP2019/063753**

(87) Internationale Veröffentlichungsnummer:
**WO 2019/229036 (05.12.2019 Gazette 2019/49)**

(54) **VERFAHREN ZUR AUSWERTUNG VON RUMPFELEKTRONENSPEKTREN**

METHOD FOR EVALUATING CORE LEVEL SPECTRA

PROCEDE POUR EVALUER DES SPECTRES DES ÉLECTRONS DE COEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2018 DE 102018208587**

(43) Veröffentlichungstag der Anmeldung:
**14.04.2021 Patentblatt 2021/15**

(73) Patentinhaber: **Forschungszentrum Jülich GmbH 52428 Jülich (DE)**

(72) Erfinder:
• **BROEDER, Jens**
  **52070 Aachen (DE)**
• **WORTMANN, Daniel**
  **52428 Jülich (DE)**

(74) Vertreter: **dompatent von Kreisler Selting Werner - Partnerschaft von Patent- und Rechtsanwälten mbB Deichmannhaus am Dom Bahnhofsvorplatz 1 50667 Köln (DE)**

(56) Entgegenhaltungen:
• **GOLOVCHAK R ET AL: "Short-range order evolution in S-rich Ge S glasses by X-ray photoelectron spectroscopy", JOURNAL OF NON-CRYSTALLINE SOLIDS, vol. 357, no. 7, 2011, pages 1797 - 1803, XP028368985, ISSN: 0022-3093, [retrieved on 20110210], DOI: 10.1016/J.JNONCRYSOL.2011.02.005**
• **CARL NORDLING ET AL: "Precision Method for Obtaining Absolute Values of Atomic Binding Energies", PHYSICAL REVIEW, vol. 105, no. 5, 1 March 1957 (1957-03-01), US, pages 1676 - 1677, XP055620843, ISSN: 0031-899X, DOI: 10.1103/PhysRev.105.1676**
• **THOMAS STEMPEL PEREIRA: "Effiziente selbstorganisierte Silicium-Nanoemitter-Solarzellen: Oberflächenanalyse und Photoelektrochemie", 17 November 2011 (2011-11-17), XP055620790, Retrieved from the Internet <URL:https://pdfs.semanticscholar.org/9de1/723470d4d950bef9afbedbe98747fc4442b9.pdf> [retrieved on 20190911], DOI: 10.14279/depositonce-3033**
• **Y-P MAILLARD ET AL: "Energies and widths of atomic core-levels in liquid mercury", THE EUROPEAN PHYSICAL JOURNAL D ; ATOMIC, MOLECULAR AND OPTICAL PHYSICS, SOCIETÀ ITALIANA DI FISICA, BO, vol. 57, no. 2, 16 February 2010 (2010-02-16), pages 155 - 170, XP019784269, ISSN: 1434-6079**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 803 357 B1

- **ANDREA HAUG: "Oberflächenanalytische Untersuchungen von dünnen Cytosin-, Thymin-, Uracil-und Hydrogen-Silsesquioxan-Filmen", 8 December 2009 (2009-12-08), XP055621817, Retrieved from the Internet <URL:https://pdfs.semanticscholar.org/91f6/2bf0daeb832c623d8d855d846eeb7dca069e.pdf> [retrieved on 20190912]**

- **SILVANO LIZZIT: "Surface shifted core level photoemission from clean and oxygen covered metal surfaces", 1 January 2003 (2003-01-01), XP055621824, Retrieved from the Internet <URL:https://mediatum.ub.tum.de/doc/602984/602984.pdf> [retrieved on 20190912]**

**Beschreibung**

**Gebiet der Erfindung**

Die Erfindung betrifft Verfahren zur ab initio-Auswertung eines Rumpfelektronenspektrums einer chemischen Probe, und insbesondere eines durch Röntgenphotoelektronenspektroskopie (XPS, ESCA) generierten Spektrums durch Konstruktion einer Anpassungsfunktion basierend auf den elementarchemisch denkbaren Phasenspektren und Approximation der Anpassungsfunktion an das gemessene Rumpfelektronenspektrum zur Ermittlung der in der Probe enthaltenen Phasen mit ihrem Konzentrationsanteil. Die Erfindung betrifft zudem ein Computerprogrammprodukt, das direkt in eine Speichereinheit geladen werden kann und Softwareabschnitte umfasst, mit denen das erfindungsgemäße Verfahren ausgeführt werden kann.

Aus dem wissenschaftlichen Artikel ISSN:0022-3093, DOI: 10.1016/J.JNONCRYSOL.2011.02.005 geht die Approximation einer Anpassungsfunktion eines Rumpfelektronenspektrums durch Auswertung von Peak-Positionen hervor.

**Hintergrund der Erfindung**

Die Röntgenphotoelektronenspektroskopie (englisch: X-ray photoelectron spectroscopy, XPS, oft auch electron spectroscopy for chemical analysis, ESCA) ist eine etablierte und weit verbreitete Methode aus der Gruppe der Photoelektronenspektroskopien (PES), um die chemische Zusammensetzung vor allem von Festkörpern bzw. deren Oberfläche zerstörungsfrei zu bestimmen. Man erhält dabei zunächst eine Antwort auf die Frage der qualitativen Elementanalyse, also aus welchen chemischen Elementen der Festkörper besteht. Darüber hinaus geben die erhobenen Daten auch einen Hinweis auf den elektronischen und chemischen Status der enthaltenen Elemente, so dass prinzipiell auch die strukturelle Zusammensetzung von komplexer aufgebauten Festkörpern, bzw. Festkörperoberflächen, die beispielsweise mehrere Phasen aufweisen, ermittelt werden kann. Während die qualitative Analyse der Elemente relativ einfach aus den Messdaten erhoben werden kann, ist die chemisch-strukturelle Interpretation von hochaufgelösten XPS-Daten immer noch sehr komplex und führt häufig zu falschen Resultaten. Die Auswertung umfasst umfangreiche Fitting-Prozeduren und den Vergleich von extrahierten Fitting-Parametern (wie Bindungsenergien der Rumpfelektronen oder chemische Verschiebungen für die jeweilige chemische Umgebung) mit Literaturdaten, mit durch Simulation gewonnenen Daten oder mit selbst erhobenen Messdaten. Das Verfahren ist damit im hohen Maße von der Erfahrung des Benutzers abhängig und damit nicht automatisierbar. Zudem ist die Erhebung eigener Messdaten mit ausreichender Genauigkeit arbeits- und zeitaufwändig. Erschwerend kommt hinzu, dass die entsprechenden Datenbanken nur für ca. 5% der bekannten Strukturen Referenzdaten enthalten. Es besteht daher der Bedarf für verbesserte Verfahren zur Auswertung von Rumpfelektronenspektren, die bevorzugt auch automatisierbar sind.

**Zusammenfassung der Erfindung**

Es ist eine Aufgabe der vorliegenden Erfindung, ein verbessertes Verfahren zur Auswertung von Rumpfelektronenspektren zur Verfügung zu stellen.

Gemäß einem ersten Aspekt der Erfindung wird ein Verfahren zur *ab* initio-Auswertung eines Rumpfelektronenspektrums zur Verfügung gestellt, wobei das Verfahren die folgenden Schritte umfasst:

a. Bereitstellen eines Rumpfelektronenspektrums für eine Probe mit bekannter elementarer Zusammensetzung;
b. Konstruktion einer Anpassungsfunktion $S_{theo}(E)$ durch konzentrationsgewichtete Linearkombination von Phasen-spektren $\Phi_{comp,i}(E)$, die für jede in dieser Probe möglicherweise vorhandene Phase anhand der bekannten Bindungsenergien und chemischen Verschiebungen der Rumpfelektronen dieser Phase berechnet werden;
c. Approximation des Rumpfelektronenspektrums durch die Anpassungsfunktion $S_{theo}(E)$ aus Schritt (b);
d. Bei mangelnder Approximation in Schritt (c) Ausschluss derjenigen Phasen, deren Phasenspektrum keinen Beitrag zu dem Rumpfelektronenspektrum liefern oder spektral nicht unterscheidbar sind und anschließender erneuter Konstruktion der Anpassungsfunktion $S_{theo}(E)$ gemäß Schritt (b) unter Linearkombination der verbliebenen Phasen;
e. Iterative Approximation gemäß Schritt (b) bis (d) bis die Restabweichungen minimal sind.

Weitere Ausführungsformen sind Gegenstand der weiteren unabhängigen oder abhängigen Ansprüche.

Das erfindungsgemäße Auswertungsverfahren vereinigt mehrere entscheidende Vorteile gegenüber den aus dem Stand der Technik bekannten Auswertungsverfahren.

Das erfindungsgemäße Verfahren leistet die Interpretation von Rumpfelektronenspektren mit einem "Reverse-Engineering"-Ansatz, bei dem ausgehend von den physikalischen Informationen eine eingeschränkte Approximation (sog. "constrained fit") durchgeführt wird. Hierbei werden auf Basis der möglichen Phasen die jeweiligen Phasenspektren berechnet und durch Linearkombination eine Anpassungsfunktion erstellt, die dann zur Approximation des Rumpfelektronenspektrums verwendet wird.

Im Gegensatz zum Stand der Technik werden also nicht die einzelnen Bindungsenergien und chemischen Verschiebungen zum Abgleich mit dem Spektrum verwendet, sondern physikalisch motivierte Phasenspektren erstellt, die deutlich komplizierter als die normalen Peakfunktionen sein können und nicht im gleichen Funktionsraum liegen können. Durch die konzentrationsgewichtete Linearkombination dieser Phasenspektren ergibt sich eine Anpassungsfunktion, die somit jegliches gemischte Spektrum aus diesen Phasen darstellen kann.

Durch die Approximation (sog. "curve fitting" oder kurz "Fitting") dieser Anpassungsfunktion kann schnell und automatisiert ohne benutzerseitige Vorannahmen eine vollständige Interpretation komplexer Rumpfelektronenspektren durchgeführt werden.

Erstaunlicherweise sind die durch Simulation erhaltenen Werte für die Bindungsenergien und chemischen Verschiebungen so präzise, dass sie die vollständige chemische Interpretation einer komplexen multiphasischen Oberfläche erlauben und auch zur Identifizierung einer bisher nicht vermuteten Phase führen. Weiterhin kann auch die temperaturabhängige Änderung eines Rumpfelektronenspektrums chemisch aufgeschlüsselt werden.

Das vorliegende Verfahren ist flexibel, insofern weitere Randbedingungen eingeführt werden können oder die Anpassungsparameter variiert werden können. So kann zum Beispiel basierend auf der bekannten stöchiometrischen Zusammensetzung der Probe durch Variation des Konzentrationsfitparameters $\lambda_i$ die Anpassungsfunktion angepasst werden. Damit kann das Verfahren gezielt an das Messverfahren, die Messergebnisse oder die zugrundeliegende Probe angepasst werden.

Das erfindungsgemäße Daten-basierten Verfahren hat den zusätzlichen Vorteil, dass die Anpassung weniger freie Parameter als herkömmliche Auswertungsmethoden benötigt.

Ein weiterer großer Vorteil dieses Verfahrens gegenüber herkömmlichen Methoden ist, dass man nun systematisch weiter physikalisch oder experimentell motivierte Restriktionen (z.B. die gemessene Stöchiometrie) in die Fitfunktion einbauen kann.

Des Weiteren können spektrale Bestandteile, welche aus zusätzlichen physikalischen Sachverhalten einwirken (wie beispielsweise Oberflächenzustände, Anregungen, Coster-Kronig-Effekt etc.) entweder in der Spektrumvorbehandlung entfernen werden oder man kann bei dem erfindungsgemäßen Verfahren die Konstruktion der spektralen Komponenten entsprechend erweitern.

Da zahlreiche Simulationsverfahren zur Berechnung von Bindungsenergien und chemischen Verschiebungen bekannt sind (z.B. das Verfahren der Dichtefunktionaltheorie) können die Phasenspektren und damit auch die Anpassungsfunktion in einfacher Weise berechnet werden und entsprechend sehr schnell eine allgemein verwendbare Datenbank an Phasenspektren aufgebaut werden.

Insgesamt stellt so das vorliegende Verfahren einen entscheidenden Durchbruch in der Auswertung komplexer Rumpfelektronenspektren dar und hat hiermit das Potenzial, der Photoelektronenspektroskopie völlig neue Anwendungsgebiete zu eröffnen.

## Die Erfindung im Einzelnen

Das erfindungsgemäße Verfahren ist ein *ab initio-Verfahren,* da es ohne Kenntnis der Ergebnisse der entsprechenden Messung durchgeführt werden kann, insofern hier für jede möglicherweise in der Probe vorhandene Phase das entsprechende Phasenspektrum $\Phi_{comp,i}(E)$ anhand der bekannten Bindungsenergien und chemischen Verschiebungen der Rumpfelektronen dieser Phase berechnet wird. Durch konzentrationsgewichtete Linearkombination der so berechneten Phasenspektren $\Phi_{comp,i}(E)$ wird eine Anpassungsfunktion $S_{theo}(E)$ konstruiert. Im nächsten Schritt erfolgt dann im Sinne eines "Curve fitting" eine Approximation des Rumpfelektronenspektrums durch diese Anpassungsfunktion $S_{theo}(E)$, um die in der komplexen Hüllkurve des Rumpfelektronenspektrums sich verbergenden Einzelphasen zu ermitteln. Da die Anpassungsfunktion die Kombination aller denkbaren Phasen beinhaltet ist es sehr wahrscheinlich, dass einige dieser Phasen und damit auch die davon abgeleiteten Phasenspektren nicht in dem Spektrum repräsentiert sind. Dies wird durch eine unzureichende Approximation deutlich, so dass im nächsten Schritt diejenigen Phasen, deren Phasenspektrum keinen Beitrag zu dem Rumpfelektronenspektrum liefern, oder spektral nicht unterscheidbar sind ausgeschlossen werden und die Anpassungsfunktion $S_{theo}(E)$ erneut unter Linearkombination der verbliebenen Phasen konstruiert wird. Diese optimierte Anpassungsfunktion wird erneut für die Approximation verwendet und kann bei weiterhin unzureichender Approximation wieder durch Phasenausschluss und Neukonstruktion weiter optimiert werden. Somit handelt es sich um ein iteratives Approximationsverfahren, dass so lange durchgeführt wird bis die Anpassungsfunktion $S_{theo}(E)$ eine ausreichende Approximation an das Rumpfelektronenspektrum zeigt. Unter einer ausreichenden Approximation ist eine Approximation zu verstehen, bei der die jeweils verwendete Approximationsverfahren bei iterativer Anwendung keine weitere Annäherung an das Rumpfelektronenspektrum mehr zeigt. Bei der Methode der kleinsten Quadrate ("least square Methode", KQ-Methode) ist dies der Fall, wenn die Restabweichungen minimal sind.

Das erfindungsgemäße Verfahren ist prinzipiell für alle spektroskopischen Methoden verwendbar, bei denen Rumpfelektronenspektren (sog. Core-level-Spektren) aufgenommen werden. So kann das auszuwertende Rumpfelektronenspektrum durch eine der folgenden spektroskopischem Methoden generiert worden sein:

  i. Röntgenphotoelektronenspektroskopie (XPS, ESCA),
  ii. Röntgenabsorptionsspektroskopie (XAS),
  iii. Auger-Elektronenspektroskopie (AES), oder
  iv. Röntgenemissionsspektroskopie (XES).

In bevorzugter Weise handelt es sich um ein mittels Röntgenphotoelektronenspektroskopie (XPS, ESCA) aufgenommenes Rumpfelektronenspektrum.

Das auszuwertende Rumpfelektronenspektrum kann vor der eigentlichen Anwendung des erfindungsgemäßen Verfahrens einer Vorbehandlung unterzogen werden. Entsprechende Vorbehandlungen von Spektren sind dem Fachmann bekannt und er kann hier gezielt auf diese zurückgreifen. Bevorzugterweise handelt es sich hierbei um die Bestimmung und Subtraktion der Hintergrundwerte oder um die Kenntnis und Berücksichtigung von Shake-up-Stelliten und Shake-off-Satelliten im Spektrum.

Das erfindungsgemäße Verfahren kann zur Interpretation aller chemischen Proben dienen, die ein Rumpfelektronenspektrum ergeben. Dies sind insbesondere Festkörper und Festkörperoberflächen. In spezieller Weise sind hier Metalle und Legierungen der Auswertung zugänglich.

Erfindungsgemäß ist unter der in der Probe enthaltene Phase ein räumlicher Bereich mit gleichartigen physikalischen und chemischen Eigenschaften zu verstehen. Dieser Bereich ist bevorzugt ausgewählt ist aus der Gruppe bestehend aus Element, Molekül, Material, Materialverbindung, Oberfläche, Oberflächenzustand und Nanopartikel.

Für die Berechnung der Phasenspektren müssen die Bindungsenergien oder chemischen Verschiebungen der Rumpfelektronen bekannt sein. Falls vorhanden, kann hier auf experimentell erhobene Daten oder publizierte Daten (z.B. als Eintrag in der NIST-Datenbank) zurückgegriffen werden. Erfindungsgemäß sind solche Datenquellen aber nicht erforderlich, da die Phasenspektren auch mit Hilfe von ab initio-Simulationen ermittelt werden können. Dem Fachmann stehen hier zahlreiche Verfahren zur Verfügung, wie beispielsweise Verfahren der Dichtefunktionaltheorie (DFT), Vielteilchenmethoden oder dem maschinellen Lernen basierend auf *ab initio*-Simulationsdaten.

In besonders bevorzugter Weise erfolgt die Simulation hierbei nach dem Verfahren der Dichtefunktionaltheorie (DFT).

Erfindungsgemäß wird bei dem Verfahren ein berechnetes Phasenspektrum eingesetzt. Das Phasenspektrum $\Phi_{comp,i}(E)$ besteht hierbei aus einer Linearkombination von M Peakfunktionen $V_j$, wobei diese M Peakfunktionen jeweils durch Multiplikation mit einem Intensitätsfaktor $a_j$ gewichtet werden.

Das Phasenspektrum $\Phi_{comp,i}(E)$ wird bevorzugt gemäß der folgenden Formel berechnet:

$$\Phi_{\mathrm{comp},i}(E) = \sum_{j=1}^{M} \alpha_j V_j(E, \mu_j, f_{\mathrm{G}}, f_{\mathrm{L}})$$

Hierbei ist:

| | |
|---|---|
| M | die Anzahl der chemischen Umgebungen in der Phase; |
| $a_j$ | der jeweilige Intensitätsfaktor für die jeweilige Peak-Funktion $V_j$; |
| Vj | die Peak-Funktion, die beispielsweise ein Voigt-Profil, ein Pseudo-Voigt-Profil, eine Lorentz-Kurve oder eine Gauß-Kurve ist; |
| E | die Bindungsenergie als Funktionsvariable; |
| $\mu_j$ | die Rumpfelektronen-Bindungsenergie dieser chemischen Umgebung; und |
| $f_L$, $f_G$ | Parameter der Peakfunktion, die die Breite der Profile beschreiben. |

Das Phasenspektrum kann auch aus chemischen Verschiebungen konstruiert werden, falls die absoluten Bindungsenergien $\mu_j$ nicht bekannt sind. Die Bindungsenergien können aus den chemischen Verschiebungen $C_{j,lm}$ mit Hilfe der bekannten elementaren Bindungsenergie Referenz $E_{B,ref}$ des betrachteten Rumpfzustandes ausgerechnet werden gemäß:

$$\mu_{\mathrm{j}} = E_{\mathrm{B,\ ref}} - C_{\mathrm{j},\ell m}$$

Durch Linearkombination der einzelnen Phasenspektren erhält man die Anpassungsfunktion $S_{theo}(E)$. In bevorzugter Weise wird die Anpassungsfunktion gemäß der folgenden Formel konstruiert:

$$S_{\mathrm{theo}}(E) = \sum_{i=1}^{N} \lambda_i \Phi_{\mathrm{comp},i}(E)$$

Hierbei ist:

$\lambda_i$      der Konzentrationsfitparameter der jeweiligen Phase i;
$\Phi_{comp,i}(E)$      das jeweilige Phasenspektrum i;
N      die Anzahl der für die Anpassung verwendeten möglicherweise vorhandenen Phasen.

Der Fachmann kann bei der Durchführung der Approximation auf die zahlreichen Approximationsverfahren aus dem Stand der Technik zurückgreifen. Bevorzugt ist hier als Approximationsmethode die Methode der kleinsten Quadrate (KQ-Methode).

In einer Ausführungsform der Erfindung erfolgt die Approximation im unter Anwendung eines Konzentrationsfitparameters $\lambda_i$ pro Phasen- oder Komponentenspektrum. Im Falle der Konstruktion des Phasenspektrums aus chemischen Verschiebungen kann es sinnvoll sein, je nach Genauigkeit der verwendeten Daten, die elementaren Bindungsenergie Referenz $E_{B,ref}$ in der Approximation mit zu variieren. Gegebenenfalls kann es sogar sinnvoll sein, eine kleine Variation der Referenz Bindungsenergie pro Phase zu erlauben.

Bei der Approximation kann die weitere Anpassung nicht nur auf Basis der Phasenspektren geschehen, insofern hier beispielsweise Phasen ohne Phasenbeitrag ausgeschlossen werden, sondern die der Anpassungsfunktion zugrundeliegenden Phasenspektren können auch selber variiert werden. Durch diese zusätzliche Anpassung steigt die Güte der Approximation. In einer Ausführungsform werden hier zusätzlich die Peakfunktionsparameter angepasst. Im Falle der Voigt-Profile handelt es sich hierbei um die Parameter $f_L$ und $f_G$.

In einer Ausführungsform der Erfindung werden bei dem Verfahren bei zwei Phasen mit ununterscheidbaren Beiträgen zum Spektrum eine dieser Phasen von der weiteren Anpassung ausgeschlossen wird, falls der Phasen Konzentrationsfitparameter in Übereinstimmung mit dessen Standardabweichung null ist und nicht auf eine Phasenununterscheidbarkeit hindeutet.

Bei mehr als zwei Phasen mit ununterscheidbaren Beiträgen, wird nacheinander jeweils eine dieser Phasen von der weiteren Anpassung ausgeschlossen und ermittelt, für welchen Phasenausschluss die Anpassung optimal ist.

In einer weiteren Ausführungsform der Erfindung werden bei dem Verfahren die bekannten Messunsicherheiten der experimentellen Daten bei der Anpassung berücksichtigt.

Zweckmäßigerweise kann man das Auswertungsverfahren weiter einschränken, indem man beispielsweise die Parameter für das Approximationsparameter anpasst, oder basierend auf der bekannten stöchiometrischen Zusammensetzung der Probe unter Änderung der Konzentrationsfitparameter $\lambda_i$ die Anpassungsfunktion ändert.

Es ist eine weitere Aufgabe der vorliegenden Erfindung, ein verbessertes Computerprogrammprodukt zur Durchführung eines Auswertungsverfahrens für Rumpfelektronenspektren zur Verfügung zu stellen.

Gemäß einem weiteren Aspekt wird ein Computerprogrammprodukt zur Verfügung gestellt. Das Computerprogrammprodukt umfasst Computer-Code-Mittel, die in einer Speichereinheit eines Auswertungsrechners gespeichert werden können. Die Computer-Code-Mittel sind derart ausgestaltet, dass die Verfahrensschritte gemäß einer Ausführungsform des zuvor beschriebenen Verfahrens auf einem Prozessor eines Auswertungsrechners ausgeführt werden können.

Hierbei können insbesondere die Schritte der Berechnung der Phasenspektren und der Konstruktion der Anpassungsfunktion auf einem separaten oder externen Auswertungsrechner durchgeführt werden. Die eigentliche Auswertung kann dann unter Verwendung der Anpassungsfunktion auf einem hierfür optimierten Auswertungsrechner durchgeführt werden.

Die Speichereinheit umfasst jede geeignete Speichereinrichtung, insbesondere digitale Speichereinrichtungen wie zum Beispiel optische oder Festkörperspeicher. Der Prozessor umfasst jede Art von Mikroprozessor oder Applikationsspezifischem integrierter Schaltkreis (ASIC).

**Ausführungsbeispiele**

## 1. XPS-Analyse eines Beryllium-Titan (Be-Ti) Festkörpers

### 1.1 Grundlegende Vorgehensweise

In diesem Beispiel werden zwei Beryllium 1s XPS Spektren, von einer Beryllium-Titan Probe analysiert und interpretiert. Die Spektren wurden am Forschungszentrum Jülich GmbH, Institut für Energie- und Klimaforschung - Plasmaphysik (IEK-4), gemessen und veröffentlicht (Helfer, N., (2017), "Komparative Untersuchung von Berylliden mit PhotoelektronenSpektroskopie", Masterarbeit, Lehrstuhl für Experimentelle Physik I, TU-Dortmund). Der Spektrums Hintergrund dieser Spektren wurde bestimmt.

Für Be-Ti Verbindungen sind derzeit keine Literaturdaten von 1s Bindungsenergien und chemischen Verschiebungen bekannt (siehe NIST XPS Datenbank). Somit mussten erst, um die Erfindung anzuwenden zu können, alle Bindungsenergien jeglicher bekannten Be-Ti Phasen mit Hilfe von *Ab initio* Simulationen ausgerechnet werden.

An diesen XPS Messdaten wird die hier vorgestellte Erfindung beispielhaft angewendet und die Spektren interpretiert.

### 1.2 Bindungsenergien von Ab initio Simulation

Für die *ab initio* Simulation wurde die Dichtefunktionaltheorie (DFT) gemäß der 'full-potential linearized augmented plane wave' (FLAPW) Methode mit dem *FLEUR* Programm (www.flapw.de) verwendet. Die generalisierte Gradienten-Approximation gemäß der Perdew-Burke-Enzerhof Form wurde auf das Austausch-Korrelationspotential verwendet. Die Rumpfelektronen werden in dem "all-electron *FLEUR"* Programm relativistisch behandelt. Für die Simulationen wurden alle experimentell bekannten Be-Ti-Kristallstrukturen aus der ICSD Datenbank zu anorganischen Kristallstrukturen extrahiert. Aus der vorher bekannten Struktur der Elementarzelle ist bekannt, wie viele Atomtypen (M) eines Elementes es gibt und wie viele Elektronen (Streuer) insgesamt von dem jeweiligen Core-level zum Spektrum beitragen.

Für alle Be-Ti-Phasen wurden die chemischen Verschiebungen innerhalb der "initial state"-Approximation berechnet. Diese im Vergleich zu anderen Ansätzen stark vereinfachte Approximation erwies sich für die Be-Ti-phasen als ausreichend. Die Core-level-Verschiebung $C_{i,lm}$, eines Core-Zustandes (l,m) für einen Atomtyp (i), entspricht gemäß der folgenden Gleichung ungefähr der Differenz zwischen zwei Kohn-Sham Energien dieses Core-Zustandes und der jeweiligen Fermi-Energie:

$$C_{i,\ell m}(\mathrm{Be}) \approx \Delta E_{i,\ell m} = \epsilon_{i,\ell m}(\mathrm{Be}_x\mathrm{Ti}_y) - \epsilon_{\mathrm{Fermi}}(\mathrm{Be}_x\mathrm{Ti}_y) - \epsilon_{\ell m}(\mathrm{Be}) + \epsilon_{\mathrm{Fermi}}(\mathrm{Be})$$

Entsprechend werden drei Selbstkonsistenz-Rechnungen mit einer "all-electron"-Methode benötigt, um alle Core-level Verschiebungen einer gegebenen binären Verbindung zu bestimmen. Erfahrungsgemäß können die initialen Verschiebungen unterhalb 0,05 eV konvergiert werden, um den Vergleich zu den experimentell bestimmten chemischen Verschiebungen zu erlauben. Die Ergebnisse sind in der folgenden Tabelle 1 zusammengefasst:

Tabelle 1: *Ab initio* Resultate aller Core-level Verschiebungen der stabilsten Verbindungen des Be-Ti-Systems. Basierend auf der jeweiligen Kristallsymmetrie gibt es verschiedene chemische Umgebungen, die in unterschiedlichen chemischen Verschiebungen resultieren. Alle diese Verschiebungen sind experimentell bisher nicht ermittelt worden. Basierend auf den Verschiebungen und zusammen mit der Anzahl der Elektronen in den chemischen Umgebungen können alle Be 1s XP Spektren des Be-Ti Systems konstruiert werden.

| Material | Be 1s electrons | Be 1s DFT CLSs [eV] |
|---|---|---|
| Be$_{12}$Ti | 8 8 8 | 1.02, 0.79, 0.32 |
| Be$_{17}$Ti$_2$ $\alpha$ | 6 12 12 4 | 1.03, 0.97, 0.82, 0.48 |
| Be$_{17}$Ti$_2$ $\beta$ | 6 12 12 4 | 1.08, 0.98, 0.81, 0.65 |
| Be$_3$Ti | 2 14 4 | 1.52, 1.36, 0.84 |
| Be$_2$Ti | 4 | 1.29 |
| BeTi | 2 | 0.88 |

Aus den ausgerechneten chemischen Verschiebungen für Beryllium $C_{j,lm}$ werden absolute Bindungsenergien $\mu_j$ berechnet gemäß:

$$\mu_j = E_{B,\,ref} - C_{j,\ell m}(Be)$$

wobei, $E_{B,ref}$ in diesem Falle die experimental bestimmte Rumpfelektronen Bindungsenergie von elementaren Beryllium ist.

Für die auszuwertenden Be 1s Spektren beträgt diese Reference Energie laut NIST Datenbank 111,82 $\pm$ 0,06 eV (J. Electron Spectrosc. Relat. Phenom. 185, 1 (2012)).

### 1.3 Auswertung laut Stand der Technik

Eine Auswertung nach dem Stand der Technik wurde in (Helfer, N., (2017). Komparative Untersuchung von Berylliden mit Photoelektronen-Spektroskopie, Masterarbeit, Lehrstuhl für Experimentelle Physik I, TU-Dortmund). vorgenommen. Teile dieser Masterarbeit werden hier wie folgt skizziert.

Für die Evaluierung der Spektren wurde die Unifit 2016 Fitting-Software benutzt. Alle angepassten Funktionen haben ein Voigt-Profil, der Hintergrund vom Shirley-Typ wird numerisch während der Approximation adjustiert.

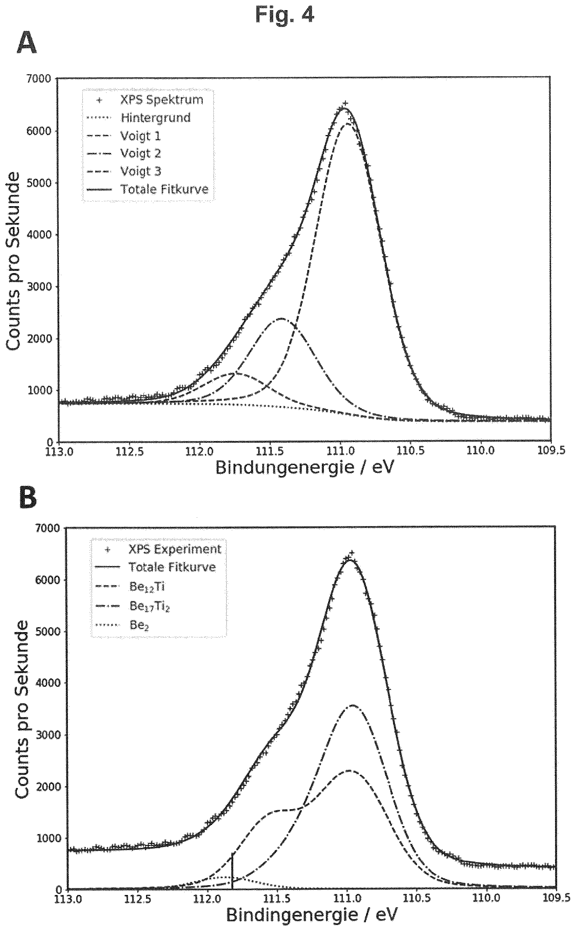

Die bestimmte Eindringtiefe bei einer kinetischen Energie von 1370 eV wurde auf ca. 73.3 Å bestimmt. Eine durch Sputtern-Annealing-Zyklus gereinigte Probe wurde mit hoher Auflösung bei Raumtemperatur vermessen. Das entsprechende Spektrum ist in Figur 4 mit Approximation dargestellt. Das Spektrum zeigt auf der hochenergetischen Seite eine klare Schulter, und es wurde die Abwesenheit des Berylliumoxid-Signals bei 114 eV festgestellt.

Eine Approximation wurde mit drei Voigt-Funktionen für drei unterschiedliche chemische Umgebungen von $Be_{12}Ti$ durchgeführt. Die volle Halbwertsbreite aller drei Signale wurde als eine Variable variiert, welche 0,49 eV für den Gauss'schen Anteil und 0,10 eV für den Lorentz Beitrag ist. Die durch das Fitting sich ergebenden Bindungsenergien sind in der folgenden Tabelle 2 aufgelistet:

Tabelle 2: Bindungsenergien der approximierten Signale (Peaks) in dem Beryllium 1s Spektrum aus Masterarbeit von N. Helfer.

|  | Peak I | Peak II | Peak II |
|---|---|---|---|
| Bindungsenergie 1/eV | 110.9376 | 111.4076 | 111.7376 |
| Halbwertsbreite Gauß 1/eV | 0.48991 | 0.48991 | 0.48991 |
| Halbwertsbreite Lorentz 1/eV | 0.10286 | 0.10286 | 0.10286 |
| Peakhöhe / cps | 5605.8 | 0,30233 / PeakI | 0,10636 / PeakI |
| Relative Fläche | 0.7095 | 0.2149 | 0.0756 |
| Shift to 111.85 eV | 0.91 | 0.44 | 0.11 |

Die Wahl von drei Voigt-Beiträgen erfolgte aus mehreren Gründen. Zunächst einmal war es die geringste Anzahl an Beiträgen, die eine korrekte Beschreibung der aufgenommenen Spektren erlaubte. Zum anderen erwartete man drei Verschiebungen, wegen der drei Atomtypen in $Be_{12}Ti$. Da das Be-Ti-System bisher kaum mittels XPS analysiert worden ist, existieren keine Angaben zu Bindungsenergie-Verschiebungen in den öffentlichen Datenbanken. Da erwartet wurde, dass die drei Atomtypen von $Be_{12}Ti$ mit gleich zum Spektrum beitragen konnte diese Approximation nach dem Stand der Technik nicht zufriedenstellend interpretiert werden.

Da es keine gute Übereinstimmung von den *ab initio* berechneten Verschiebungen (aus Tabelle 1) zu den aus den approximierten Signalpositionen stammenden Verschiebungen (Tabelle 2) gibt, konnten diese bei der Interpretation auch nicht weiterhelfen.

Die bestimmte Stöchiometrie für Be-Ti in der Messfläche erwies sich als 86 $\pm$ 2 % Be zu 7 $\pm$ 1 % Ti zu 6,9 $\pm$ 0,9 % O für einen Emissionswinkel von $\Phi = 0$.

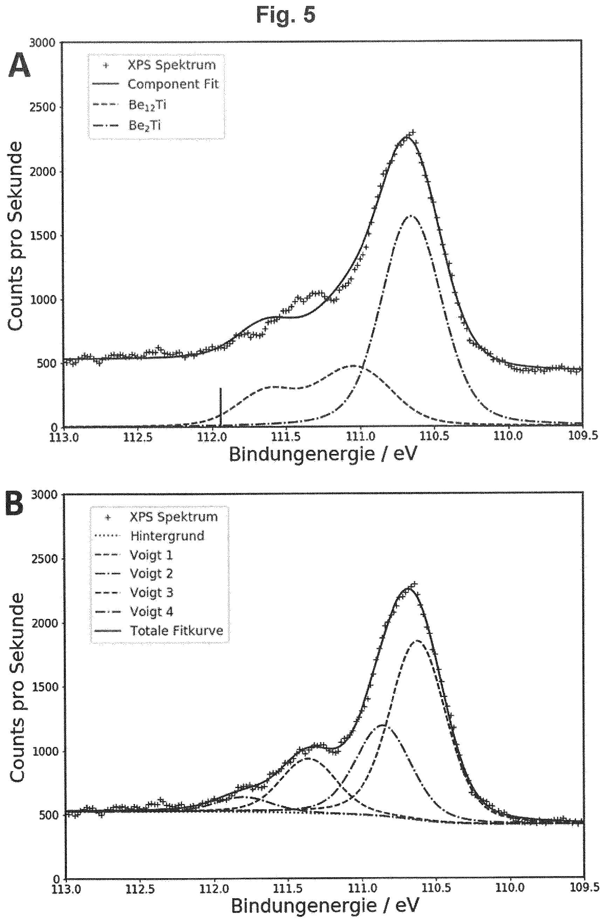

Beachtlicherweise führt die Temperaturbehandlung bei 1100°Kelvin zu einem Abfall in der Gauss'schen Halbwertsbreite und die Stöchiometrie erniedrigt sich auf 60 % Be zu 28 % Ti zu 6,9 $\pm$ 12 % O. Eine Verschiebung in der Bindungsenergie und eine starke Verformung des Spektrums wird bei dem 1100°Kelvin-Temperaturwert beobachtet, dieses Spektrum mit Approximation von vier Voigt-Profilen ist in Figur 5B dargestellt.

### 1.4 Anwendung des in der Erfindung vorgestellten Verfahrens

Mit der vorherigen Kenntnis der Kristallstruktur kann die Anzahl der von einem Element stammenden Symmetrie bedingter Atomtypen M und die Anzahl der Elektronen mit ihrem Beitrag zum Spektrum $a_j$ abgeleitet werden. Aus der Information der Atomtypen (Intensitätsinformation) und den Core-level Verschiebungen zusammen werden theoretische einzelne Phasenspektren $\Phi_{comp,i}(E)$ gemäß den folgenden Formeln berechnet:

$$\Phi_{\mathrm{comp},i}(E) = \sum_{j=1}^{M} \alpha_j \, V_j(E, \mu_j, f_{\mathrm{G}}, f_{\mathrm{L}})$$

Hierbei werden für jeden Atomtyp j die Voigt-Profile nach der Faddeeva-Repräsentation gemäß der folgenden Formel hinzugefügt, wobei jeder Atomtyp j mit einer Fläche für die Gesamtzahl der zu diesem Atomtyp beitragenden Elektronen berücksichtigt wurde:

$$V_j(E, \mu_j, f_G, f_L) = \frac{\mathrm{Re}\left[\omega\left(\dfrac{\sqrt{\ln(2)}(2(E-\mu_j)-\mathrm{i}f_L)}{f_G}\right)\right]}{f_G \dfrac{\sqrt{\pi}}{2\sqrt{\ln 2}}}$$

Eine gemäß der folgenden Formel konstruierte Überlagerung von N Spektren führt zu der Anpassungsfunktion, die direkt (nach Hinzufügen des aus dem Experiment erhaltenen Hintergrunds) an das experimentell ermittelte Rumpfelektronenspektrum approximiert wird.

$$S_{\mathrm{theo}}(E) = \sum_{i=1}^{N} \lambda_i \Phi_{\mathrm{comp},i}(E)$$

Diese Anpassung besteht aus einem Konzentrationsfitparameter $\lambda_i$ pro Phasen- oder Komponenten-Spektrum und einem weiteren Fitparameter für die elementare Be 1s Bindungsreferenzenergie $E_{B,ref}$(Be,1s).

Die Referenzenergie von 111,82/111,85 $\pm$ 0.06 eV wurde mit der experimentell bedingten Unsicherheit zur Approximation herangezogen. Hier wird die selbe Referenzenergie für alle Phasenspektren angepasst und zusätzlich wird ein einzelne Lorenz und Gauß-Verbreiterung für alle Voigt-Profile variiert.

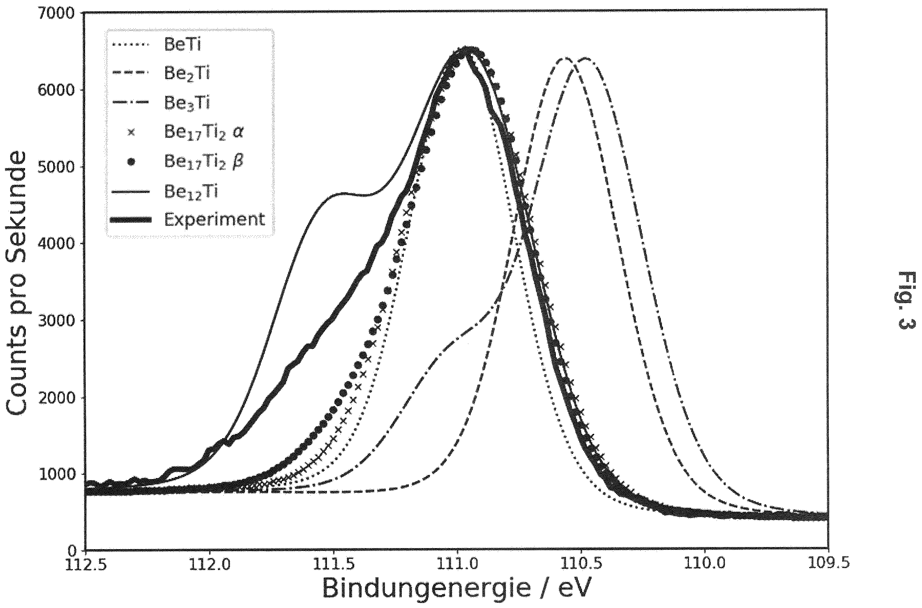

Alle konstruierten Be-Ti Phasenspektren sind in Figur 3 skaliert im direkten Vergleich zum experimentell gemessen Spektrum dargestellt.

Die Spektrenauswertung mit dieser physikalisch-basierten Approximation kann in einfacher Weise automatisiert durchgeführt werden, durch initiale Approximation mit allen Phasen und sukzessiver Deletion der spektrenfremden Phasen unter iterativer Approximation. Wenn Phasenspektren nicht eindeutig zugeordnet werden können (z.B. $Be_{17}Ti_2$ $\alpha$ und $\beta$ sind kaum zu unterscheiden,) so werden alle für das Spektrum möglichen chemischen Interpretationen erhalten. Eine Approximation mit einem großen Spektrumsbeitrag von BeTi kann auf Grund der experimentell bestimmten Stöchiometrie ausgeschlossen werden.

Die verwendeten *ab initio* chemischen Verschiebungen sind in der Tabelle 1 aufgelistet, Das finale Regressionsergebnis ist in Figur 4B dargestellt und der Beitrag zum Be 1s Signal stellt sich zusammen aus 51 % $Be_{12}Ti$, 47 % $Be_{17}Ti_2$ und 2 % von Be innerhalb der XPS Informationstiefe. Diese Anteile resultieren in einer Stöchiometrie von 10,21 Be zu 1 Ti. Neben den drei Phasenbeiträgen wurde durch die Approximation für alle Voigt-Profile eine globale Referenzbindungsenergie von 111,85 eV, eine Lorentz-Halbwertsbreite von 0.10 eV und eine Gauss'sche Halbwertsbreite von 0.43 eV ermittelt, was plausibel ist. Somit konnte eine konkrete vollständige Interpretation des Spektrums durchgeführt werden.

Analog mit den gleichen *Ab initio* Daten, wurde auch das Spektrum von der aufgeheizten Be-Ti Probe ausgewertet. Das Ergebnis ist in Figur 5A dargestellt. Scheinbar besteht die Probe nun aus $Be_2Ti$ und $Be_{12}Ti$.

### 1.5 Zusammenfassung der Ergebnisse

Zusammenfassend wird hiermit eine neuartige und verbesserte Strategie für die vollständige chemische Interpretation von XP-Spektren bereitgestellt, die den bisherigen Auswertungsansatz auf den Kopf stellt, indem basierend auf den physikalischen Gegebenheiten der Probe eine Anpassungsfunktion konstruiert wird, die alle Phasen umfasst und damit bei der Approximation alle Phasen in ihren Beiträgen berücksichtigen kann. Dies umfasst beachtlicherweise nicht nur experimentell bekannte Phasen, sondern es können auch gänzlich neue, lediglich theoretisch vorhergesagte Phasen mit in das Fitting einbezogen werden. Dies wurde anhand von Be-Ti-Messungen gezeigt, wobei ein kompletter Satz von *ab initio* bestimmten Core-level Verschiebungen für die bekannten Be-Ti Phasen konstruiert und für die Approximation herangezogen wurden. Dieser Ansatz basiert auf dem physikalischen Vorwissen über das Material und resultiert in einer verringerten Anzahl an Fitting-Parametern, so dass die Approximation zu einer klaren chemischen Interpretation der Spektren führt. Diese erfolgreiche Interpretation wurde beachtlicherweise für ein System erzielt, bei dem herkömmliche Approximationsverfahren keine valide Interpretation ermöglichen.

**Kurze Beschreibung der Abbildungen**

Diese und andere Aspekte der Erfindung werden im Detail in den Abbildungen wie folgt gezeigt:

Fig. 1 zeigt ein Flußdiagramm für die Auswertung von XPS-Spektren nach dem Stand der Technik.

Fig. 2 zeigt ein Flußdiagramm für das erfindungsgemäße Auswertungsverfahren.

Fig. 3 zeigt Be 1s Phasenspektren für alle bekannten stabilen Be-Ti-Phasen konstruiert aus mit *Ab initio* Methoden ausgerechneten chemischen Verschiebungen.

Fig. 4 zeigt ein gemessenes Beryllium 1s XP-Spektrum bei 300°K, die in A mit drei Voigt Profilen derselben Lorentz und Gauß Verbreiterung approximiert wurden und in **B** mittels des erfindungsgemäßen Verfahren approximiert wurden.

Fig. 5 zeigt ein Beryllium 1s XP-Spektrum, das basierend auf einer zweiten, chemisch unterschiedlichen Be-Ti Verbindung gemessen wurde, wobei das Spektrum in **B** mit vier Voigt Profilen derselben Lorentz und Gauß Verbreiterung approximiert wurde und in **A** mittels des erfindungsgemäßen Verfahren approximiert wurde.

**Detaillierte Beschreibung der Ausführungsbeispiele**

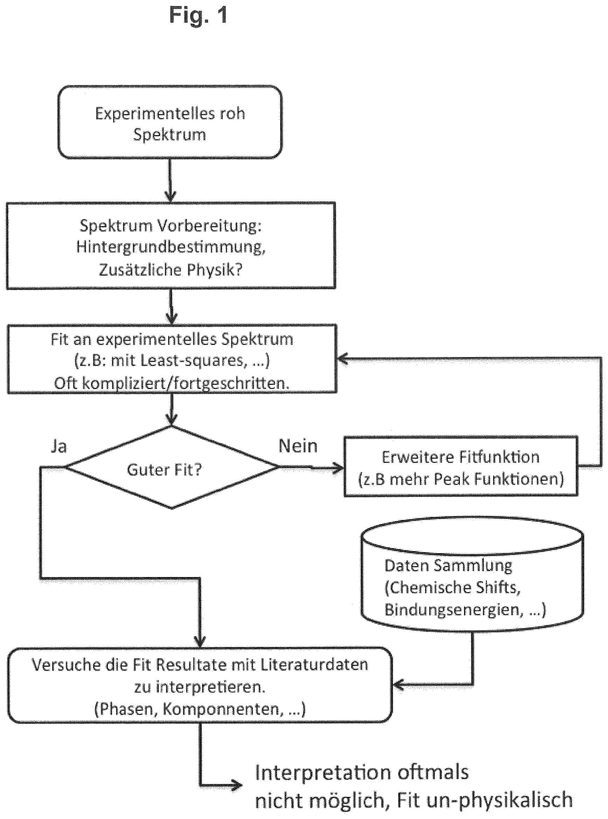

Fig. 1 zeigt ein Flußdiagramm für die Auswertung von XPS-Spektren nach dem Stand der Technik. Als erstes wird ein gemessenes, zu analysierendes Spektrum vorbereitet, um eine Approximation zu ermöglichen. In diesem Vorbereitungsschritt wird z.B der Hintergrund bestimmt und Satelliten-Peaks entfernt. Nach der Vorbereitung wird eine Regression mit möglichst wenigen Parametern, damit auch Peakfunktionen an das Spektrum durchgeführt. Hierfür gibt es entsprechende Software. Es werden solange weitere Peakfunktionen hinzugefügt, bis die Summenkurve der Peakfunktionen die Daten gut genug approximiert und man z.B in den Residuen der Anpassung keine Systematik mehr sieht, welche auf einen weiteren Beitrag schließen lässt. Die Wahl der Anzahl der Peakfunktionen liegt hier beim Auswerter. Zum Schluss versucht man die Positionen der Peaks mit bekannten Literaturwerten zu identifizieren, um daraus abzuleiten welche Phasen/Komponenten sich in der Probe befinden. Bei komplexeren Spektren führt dieses Vorgehen nicht immer zum Erfolg, weil die Datenlage unzureichend ist, oder bestimmte Peaks einfach nicht zu den Literaturdaten passen.

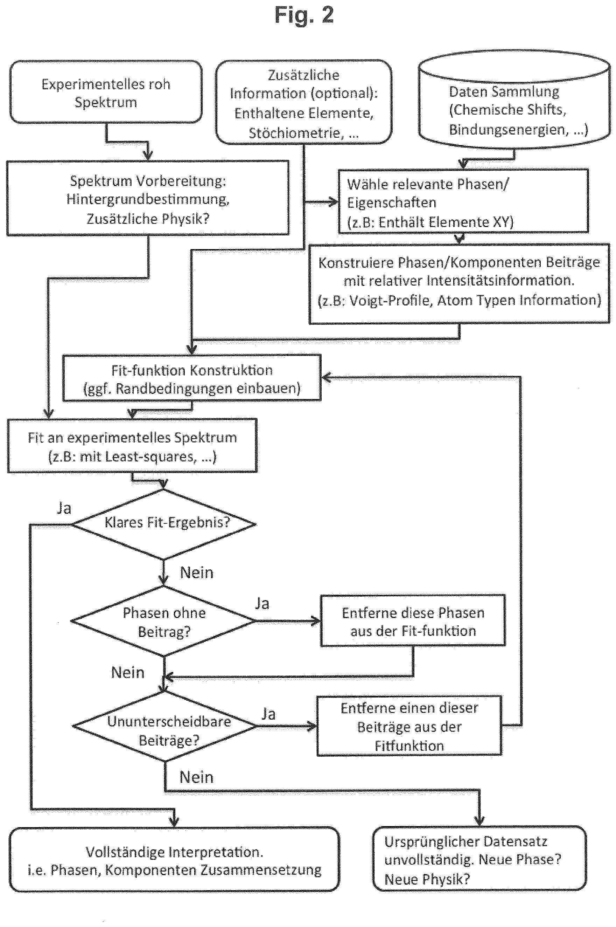

Fig. 2 zeigt ein Flußdiagramm für das erfindungsgemäße Auswertungsverfahren. Als erstes muss auch hier analog zum Stand der Technik, das Spektrum vorbereitet werden. Mit dem Wissen der vorhandenen Elemente in der Probe und um was für ein Spektrum es sich handelt, konstruiert man nun aus den vorhanden Literaturdaten eine Anpassungsfunktion, welche sich aus einzelnen Phasenspektren zusammensetzt. In diese baut können optional noch weitere bekannte Randbedingungen eingebaut werden. Die Anpassungsfunktion ist somit physikalisch motiviert und nur so gut wie die Datenlage. Im nächsten Schritt approximiert man Hilfe von Regressionsmethode(n) das experimentelle Spektrum mit der Anpassungsfunktion. In diesem Prozess werden iterativ Phasen und Komponenten ausgeschlossen, welche keinen Beitrag leisten. Falls die Approximation mit dieser zusammengesetzten Anpassungsfunktion funktioniert, erhält man sofort aus dem Ergebnis eine vollständige Interpretation von dem Spektrum.

Fig. 3 zeigt alle konstruierten Be 1s Phasenspektren aus dem Be-Ti System im Vergleich zu Messdaten einer Probe. Die Phasenspektren wurden hierbei auf die maximal gemessene Intensität skaliert. Aus dieser Darstellungsweise geht hervor, dass kein Phasenspektrum alleine zu dem gemessen Rumpfelektronen Spektrum passt.

Fig. 4 zeigt ein gemessenes Beryllium 1s XP-Spektrum bei 300°K. In A wurde das Spektrum mit drei Voigt Profilen derselben Lorentz und Gauß Verbreiterung mittels 8 Fit Parametern approximiert. In B wurde das Spektrum mittels des erfindungsgemäßen Verfahren und 6 Fit-Parametern approximiert, wobei Beiträge von $Be_{12}Ti$, $Be_{17}Ti_2$ und elementarem Beryllium ermittelt wurden. Beachtlicherweise ergibt dies Superposition dieser Beiträge eine sehr gute Anpassung an das durch die kreuzförmigen Messpunkte definierte gemessene Spektrum ("Component Fit" = durchgezogene Linie). Die Beiträge stellen eine Auswahl von insgesamt 8 Voigt-Profilen der beteiligten Atomtypen dar (nicht dargestellt) mit derselben Lorentz und Gauß Verbreiterung und Be 1s Referenz-Bindungsenergie. Hier ist zu beachten, dass es ein alleiniger $Be_{12}Ti$- Beitrag nicht vermag, die gemessene Spektralkurve zu approximieren.

Fig. 5 zeigt ein Beryllium 1s XP-Spektrum, das basierend auf einer zweiten, chemisch unterschiedlichen Be-Ti Verbindung gemessen wurde. In B wurde das Spektrum mit vier Voigt Profilen derselben Lorentz und Gauß Verbreiterung mittels 10 Fit Parametern approximiert. In A wurde das Spektrum mittels des erfindungsgemäßen Verfahren und 5 Fit-Parametern approximiert, wobei Beiträge von $Be_{12}Ti$ und $Be_2Ti$ ermittelt wurden. Beachtlicherweise ergibt dies Superposition dieser Beiträge eine sehr gute Anpassung an das durch die kreuzförmigen Messpunkte definierte gemessene Spektrum ("Component Fit" = durchgezogene Linie). Die Beiträge stellen eine Auswahl von insgesamt 7 Voigt-Profilen der beteiligten Atomtypen dar (nicht dargestellt) mit derselben Lorentz und Gauß Verbreiterung und Be 1s Referenz-Bindungsenergie.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

**1.** Ein Verfahren zur ab initio-Auswertung eines Rumpfelektronenspektrums, umfassend die folgenden Schritte:

    a. Bereitstellen eines Rumpfelektronenspektrums für eine Probe mit bekannter elementarer Zusammensetzung;

    b. Konstruktion einer Anpassungsfunktion $S_{theo}(E)$ durch konzentrationsgewichtete Linearkombination von Phasenspektren $\Phi_{comp,i}(E)$, die für jede in dieser Probe möglicherweise vorhandene Phase anhand der bekannten Bindungsenergien und chemischen Verschiebungen der Rumpfelektronen dieser Phase berechnet werden, wobei jede der in der Probe enthaltenen mindestens einen Phase als ein räumlicher Bereich mit gleichartigen physikalischen und chemischen Eigenschaften und gleicher Struktur der Elementarzelle definiert ist, der bevorzugt ausgewählt ist aus der Gruppe bestehend aus Element, Molekül, Material, Materialverbindung, Oberfläche, Oberflächenzustand und Nanopartikel;

    c. Approximation des Rumpfelektronenspektrums durch die Anpassungsfunktion $S_{theo}(E)$ aus Schritt (b);

    d. Bei mangelnder Approximation in Schritt (c) Ausschluss derjenigen Phasen, deren Phasenspektrum keinen Beitrag zu dem Rumpfelektronenspektrum liefern oder spektral nicht unterscheidbar sind und anschließender erneuter Konstruktion der Anpassungsfunktion $S_{theo}(E)$ gemäß Schritt (b) unter Linearkombination der verbliebenen Phasen;

    e. Iterative Approximation gemäß den Schritten (b) bis (d) bis die Restabweichungen minimal sind.

**2.** Verfahren nach Anspruch 1, wobei das Rumpfelektronenspektrum durch eine der folgenden spektroskopischem Methoden generiert wurde:

    i. Röntgenphotoelektronenspektroskopie (XPS, ESCA),
    ii. Röntgenabsorptionsspektroskopie (XAS),
    iii. Auger-Elektronenspektroskopie (AES), oder
    iv. Röntgenemissionsspektroskopie (XES),

    wobei XPS bevorzugt ist.

**3.** Verfahren nach einem der vorangehenden Ansprüche, wobei das Rumpfelektronenspektrum eine oder mehrere der folgenden Vorbehandlungen unterzogen wird:

    i. Bestimmung und Subtraktion der Hintergrundwerte;
    ii. Berücksichtigung von Shake-up and Shake-off- Satelliten im Spektrum. [S. 7, 2. Abs.]

**4.** Verfahren nach einem der vorangehenden Ansprüche, wobei die bekannten Bindungsenergien oder chemischen Verschiebungen der Rumpfelektronen mit Hilfe von ab *initio*-Simulationen ermittelt werden, bevorzugt durch die Verfahren der Dichtefunktionaltheorie, Vielteilchenmethoden oder dem maschinellen Lernen basierend auf *ab initio* Simulationsdaten.

**5.** Verfahren nach einem der vorangehenden Ansprüche, wobei jedes der Phasenspektren $\Phi_{comp,i}(E)$ aus einer Linearkombination von M Peakfunktionen $(V_j)$ multipliziert mit einem Intensitätsfaktor $(a_j)$ für die jeweilige Peakfunktion besteht und wie folgt berechnet wird:

$$\Phi_{\text{comp},i}(E) = \sum_{j=1}^{M} \alpha_j V_j(E, \mu_j, f_{\text{G}}, f_{\text{L}})$$

wobei

M die Anzahl der chemischen Umgebungen in der Phase ist;

$a_j$ der jeweilige Intensitätsfaktor für die jeweilige Peak-Funktion $V_j$ ist;

$V_j$ die Peak-Funktion ist, die beispielsweise ein Voigt-Profil, ein Pseudo-Voigt-Profil, eine Lorentz-Kurve oder eine Gauß-Kurve ist;

E die Bindungsenergie als Funktionsvariable ist;

$\mu_j$ die Rumpfelektronen-Bindungsenergie dieser chemischen Umgebung ist; und

$f_L$ und $f_G$ Parameter der Peak-Funktion sind, die die Breite der Profile beschreiben.

6. Verfahren nach einem der vorangehenden Ansprüche, wobei die im Schritt (b) konstruierte Anpassungsfunktion wie folgt konstruiert wird: wobei,

$$S_{\text{theo}}(E) = \sum_{i=1}^{N} \lambda_i \Phi_{\text{comp},i}(E)$$

$\lambda_i$ der Konzentrationsfitparameter der jeweiligen Phase i ist.

$\Phi_{comp,i}(E)$ das jeweilige Phasenspektrum i ist.

N die Anzahl der für die Anpassung verwendeten möglicherweise vorhandenen Phasen ist.

7. Verfahren nach einem der vorangehenden Ansprüche, wobei die im Schritt (c) verwendete Approximationsmethode die Methode der kleinsten Quadrate (KQ-Methode) ist.

8. Verfahren nach einem der vorangehenden Ansprüche, wobei die Approximation im Schritt (c) unter Anwendung eines Konzentrationsfitparameters $\lambda_i$ pro Phasen- oder Komponentenspektrum erfolgt, und die Approximation im Schritt (c) optional im Falle der Konstruktion aus chemischen Verschiebungen einen Fitparameter für die Variation der Element-Rumpfelektronen Zustandsbindungsenergie-Referenz beinhaltet.

9. Verfahren nach einem der vorangehenden Ansprüche, wobei bei der Approximation im Schritt (c) zusätzlich die Peakfunktionsparameter, welche im Falle von Voigt-Profilen die Parameter $f_L$ und $f_G$ sind, mit angepasst werden.

10. Verfahren nach einem der Ansprüche 8 oder 9, wobei im Schritt (d) bei zwei Phasen mit ununterscheidbaren Beiträgen zum Spektrum eine dieser Phasen von der weiteren Anpassung ausgeschlossen wird, falls der Phasen Konzentrationsfitparameter in Übereinstimmung mit dessen Standardabweichung null ist und nicht auf eine Phasenununterscheidbarkeit hindeutet.

11. Verfahren nach einem der vorangehenden Ansprüche, wobei basierend auf der abgeschlossenen Approximation im Schritt (e) die in der Probe vorhandenen Phasen mit ihrem Konzentrationsanteil angegeben werden.

12. Computerprogrammprodukt umfassend Computer-Code-Mittel, die in einer Speichereinheit eines Auswertungsrechners gespeichert werden können, wobei die Computer-Code-Mittel derart ausgestaltet sind, dass die Computer-Code-Mittel bei Ausführung auf dem Auswertungsrechner verursachen, dass der Auswertungsrechner die Verfahrensschritte des Verfahrens gemäß einem der Ansprüche 1-11 ausführt.

**Claims**

1. A method for *ab initio evaluation of* a core electron spectrum, comprising the following steps:

a. provision of a core electron spectrum for a sample of known elemental composition;

b. construction of a fitting function $S_{theo}(E)$ by concentration-weighted linear combination of phase spectra $\Phi_{comp,i}(E)$ calculated for each phase possibly present in said sample from the known bond energies and chemical shifts of the core electrons of said phase, wherein each of the at least one phase contained in the sample is defined as a spatial region having similar physical and chemical properties and structure of the elementary cell, preferably selected from the group consisting of element, molecule, material, material compound, surface, surface state and nanoparticle;

c. approximation of the core electron spectrum by the fitting function $S_{theo}(E)$ from step (b);

d. if the approximation in step (c) is insufficient, exclusion of those phases whose phase spectrum does not contribute to the core electron spectrum or is spectrally indistinguishable and, thereafter, reconstruction of the fitting function $S_{theo}(E)$ according to step (b) with linear combination of the remaining phases;

e. iterative approximation according to steps (b) to (d) until the residual deviations are minimal.

2. The method according to claim 1, wherein the core electron spectrum was generated by one of the following spectroscopic methods:

i. X-ray photoelectron spectroscopy (XPS, ESCA),
ii. X-ray absorption spectroscopy (XAS),
iii. Auger electron spectroscopy (AES), or
nv. X-ray emission spectroscopy (XES),
where XPS is preferred.

3. The method according to any one of the preceding claims, wherein the core electron spectrum is subjected to one or more of the following pretreatments:

i. determination and subtraction of background values;
ii. consideration of shake-up and shake-off satellites in the spectrum.

4. The method according to any one of the preceding claims, wherein the known bond energies or chemical shifts of the core electrons are determined by means of *ab initio simulations,* preferably by the methods of density functional theory, many-particles methods or machine learning based on *ab initio* simulation data.

5. The method according to one of the preceding claims, wherein each of the phase spectra $\Phi_{comp,i}(E)$ consists of a linear combination of M peak functions ($v_j$) multiplied by an intensity factor ($a_j$) for the respective peak function and is calculated as follows:

$$\Phi_{\mathrm{comp},i}(E) = \sum_{j=1}^{M} \alpha_j V_j(E, \mu_j, f_{\mathrm{G}}, f_{\mathrm{L}})$$

wherein

M is the number of chemical environments in the phase;
$a_j$ is the respective intensity factor for the respective peak function $V_j$ ;
$V_j$ is the peak function, which is, for example, a Voigt profile, a pseudo-Voigt profile, a Lorentz curve or a Gaussian curve;
E is the bond energy as a function variable;
$\mu_j$ is the core electron bond energy of this chemical environment; and
$f_L$ and $f_G$ are parameters of the peak function that describe the width of the profiles.

6. The method according to any one of the preceding claims, wherein the fitting function constructed in step (b) is constructed as follows: wherein

$$S_{\text{theo}}(E) = \sum_{i=1}^{N} \lambda_i \Phi_{\text{comp},i}(E)$$

$\lambda_i$ is the concentration fit parameter of the respective phase i,

$\Phi_{comp,i}(E)$ is the respective phase spectrum i,

N is the number of phases possibly present, which are used for the fitting.

7. The method according to any one of the preceding claims, wherein the approximation method used in step (c) is the least squares method (KQ method).

8. The method according to any one of the preceding claims, wherein the approximation in step (c) is performed using a concentration fit parameter $\lambda_i$ per phase or component spectrum, and the approximation in step (c) optionally includes, in the case of construction from chemical shifts, a fit parameter for the variation of the element core electron state bond energy reference.

9. The method according to one of the preceding claims, wherein during the approximation in step (c) the peak function parameters, which in the case of Voigt profiles are the parameters $f_L$ and $f_G$, are also adapted.

10. The method according to any one of claims 8 or 9, wherein in step (d), in the case of two phases with indistinguishable contributions to the spectrum, one of these phases is excluded from further fitting if the phase concentration fit parameter is zero in accordance with its standard deviation and does not indicate phase indistinguishability.

11. The method according to one of the preceding claims, wherein, based on the completed approximation in step (e), the phases present in the sample are indicated with their concentration fraction.

12. A computer program product comprising computer code means which can be stored in a memory unit of an evaluation computer, wherein the computer code means are configured such that the computer code means, when executed on the evaluation computer, cause the evaluation computer to perform the method steps of the method according to any one of claims 1-11.

**Revendications**

1. Procédé pour l'évaluation *ab initio* d'un spectre d'électrons de cœur, comprenant les étapes suivantes :

   a. fourniture d'un spectre d'électrons de cœur pour un échantillon dont la composition élémentaire est connue ;
   b. construction d'une fonction d'ajustement $S_{theo}(E)$ par combinaison linéaire pondérée par la concentration de spectres de phase $\Phi_{comp,\ i}(E)$ calculés pour chaque phase éventuellement présente dans ledit échantillon à partir des énergies de liaison et des déplacements chimiques connus des électrons de cœur de ladite phase, dans lequel chacune parmi l'au moins une phase contenue dans l'échantillon est définie comme une région spatiale comportant des propriétés physiques et chimiques similaires et la même structure de maille élémentaire, de préférence choisie dans le groupe constitué d'élément, molécule, matériau, composé de matériau, surface, état de surface et nanoparticules ;
   c. approximation du spectre d'électrons de cœur par la fonction d'ajustement $S_{theo}(E)$ de l'étape (b) ;
   d. en cas d'approximation insuffisante à l'étape (c), exclusion des phases dont le spectre de phase n'apporte pas de contribution au spectre d'électrons de cœur ou n'est pas distinguable spectralement, puis nouvelle construction de la fonction d'ajustement $S_{theo}(E)$ conformément à l'étape (b) avec combinaison linéaire des phases restantes ;
   e. approximation itérative conformément aux étapes (b) à (d) jusqu'à ce que les écarts résiduels soient minimaux.

2. Procédé selon la revendication 1, dans lequel le spectre d'électrons de cœur a été généré par l'une des méthodes spectroscopiques suivantes :

   i. spectroscopie photoélectronique X (XPS, ESCA),
   ii. spectroscopie d'absorption de rayons X (XAS),

iii. spectroscopie d'électrons Auger (AES), ou
iv. spectroscopie d'émission de rayons X (XES),

dans lequel XPS est préférée.

**3.** Procédé selon l'une des revendications précédentes, dans lequel le spectre d'électrons de cœur est soumis à un ou plusieurs des prétraitements suivants :

i. détermination et soustraction des valeurs de fond ;
ii. prise en compte de satellites de shake-up et de shake-off dans le spectre. [section S. 7, 2. ].

**4.** Procédé selon l'une des revendications précédentes, dans lequel les énergies de liaison ou les déplacements chimiques connus des électrons de cœur sont déterminés à l'aide de simulations *ab initio,* de préférence avec les procédés de la théorie de la fonctionnelle de la densité, des méthodes à plusieurs corps ou l'apprentissage automatique sur la base de données de simulation *ab initio.*

**5.** Procédé selon l'une des revendications précédentes, dans lequel chacun des spectres de phase $\Phi_{comp,\, i}$ (*E*) est constitué d'une combinaison linéaire de M fonctions de pic ($V_j$) multipliées par un facteur d'intensité ($\alpha_j$) pour la fonction de pic respective et est calculé comme suit :

$$\Phi_{\text{comp,i}}(\text{E}) = \sum_{j=1}^{M} \alpha_j V_j\big(\text{E}, \mu_j, f_G, f_L\big)$$

où

M représente le nombre d'environnements chimiques dans la phase ;
$\alpha_j$ représente le facteur d'intensité respectif pour la fonction de pic $V_j$ respective ;
Vj représente la fonction de pic qui est par exemple un profil de Voigt, un pseudo-profil de Voigt, une courbe de Lorenz ou une courbe de Gauss ;
E représente l'énergie de liaison en tant que variable fonctionnelle ;
$\mu_j$ représente l'énergie de liaison d'électrons de cœur dudit environnement chimique ; et
$f_L$ et $f_G$ représentent des paramètres de la fonction de pic qui décrivent la largeur des profils.

**6.** Procédé selon l'une des revendications précédentes, dans lequel la fonction d'ajustement construite à l'étape (b) est construite comme suit :

$$S_{\text{theo}}(\text{E}) = \sum_{i=1}^{N} \lambda_i \Phi_{\text{comp,i}}(\text{E})$$

où

$\lambda_i$ représente le paramètre d'ajustement de concentration de la phase i respective.
$\Phi_{comp,i}$ *(E)* représente le spectre de phase i respectif.
N représente le nombre de phases éventuellement présentes utilisées pour l'ajustement.

**7.** Procédé selon l'une des revendications précédentes, dans lequel la méthode d'approximation utilisée à l'étape (c) est la méthode des moindres carrés (méthode MC).

**8.** Procédé selon l'une des revendications précédentes, dans lequel l'approximation à l'étape (c) est effectuée en utilisant un paramètre d'ajustement de concentration $\lambda_i$ par spectre de phase ou de composant, et l'approximation à l'étape (c) comprend éventuellement, dans le cas de la construction à partir de déplacements chimiques, un paramètre d'ajustement pour la variation de la référence d'énergie de liaison d'état d'électrons de cœur d'élément.

**9.** Procédé selon l'une des revendications précédentes, dans lequel, lors de l'approximation à l'étape (c), les paramètres de fonction de pic qui, dans le cas de profils de Voigt, sont les paramètres $f_L$ et $f_G$, sont en outre ajustés.

**10.** Procédé selon l'une des revendications 8 ou 9, dans lequel, à l'étape (d), lorsque deux phases ont des contributions au spectre indiscernables, l'une de ces phases est exclue de l'ajustement supplémentaire si le paramètre d'ajustement de concentration de phase en conformité avec son écart-type est nul et n'indique pas une indiscernabilité de phase.

**11.** Procédé selon l'une des revendications précédentes, dans lequel, sur la base de l'approximation achevée à l'étape (e), les phases présentes dans l'échantillon sont indiquées avec leur pourcentage de concentration.

**12.** Produit-programme informatique comprenant des moyens de code informatique qui peuvent être stockés dans une unité de stockage d'un ordinateur d'évaluation, dans lequel les moyens de code informatique sont configurés de telle sorte que, lorsqu'ils sont exécutés sur l'ordinateur d'évaluation, les moyens de code informatique amènent l'exécution par l'ordinateur d'évaluation des étapes de procédé du procédé conformément à l'une des revendications 1 à 11.

# Fig. 1

# Fig. 2

## Fig. 3

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *J. Electron Spectrosc. Relat. Phenom.*, 2012, vol. 185, 1

- Komparative Untersuchung von Berylliden mit Photo-elektronen-Spektroskopie. **HELFER, N.** Masterarbeit, Lehrstuhl für Experimentelle Physik I. TU, 2017